# EUROPEAN PATENT APPLICATION

(11) **EP 3 829 241 A1**
(43) Date of publication of application: **02.06.2021**
(21) Application number: 19843982.0
(22) Date of filing: 02.08.2019
(51) Int. Cl.: H04W 72/04

(54) **RESOURCE CONFIGURATION METHOD AND TERMINAL DEVICE**

(30) Priority: 03.08.2018 CN 201810880382
(71) Applicant: GUANGDONG OPPO MOBILE TELECOMMUNICATIONS CORP., LTD., Dongguan Guangdong 523860 (CN)
(72) Inventor: ZHAO, Zhenshan, Dongguan, Guangdong 523860 (CN); LU, Qianxi, Dongguan, Guangdong 523860 (CN); LIN, Huei-Ming, South Yarra, Victoria 3141 (AU)
(74) Representative: Novagraaf Technologies
(86) International application number: PCT/CN2019/099003
(87) International publication number: WO 2020/025040

(57) **Abstract**

The present application discloses a resource configuring method and a terminal device, which can improve a data transmission performance between terminal devices in a D2D system. The method includes: sending, by a first terminal device, a first sidelink transmission channel, the first sidelink transmission channel being configured to indicate resource pool configuration information of a target resource pool, and the target resource pool being configured to communicate with a second terminal device. The target resource pool may be an additional resource pool other than a pre-configured resource pool. Since the additional resource pool is configured, and the first terminal device can notify other terminal devices of the resource configuration information of the additional resource pool, more terminal devices can obtain the information of the resource pool and use the resource pool for communicating, thereby improving the data transmission performance between terminal devices to a certain degree.

## Description

The present application claims priority to Chinese Patent Application No. 201810880382.X, titled "RESOURCE CONFIGURING METHOD AND TERMINAL DEVICE" filed on August 03, 2018, the entire contents of which are incorporated herein by reference.

### TECHNICAL FIELD

The present application relates to the field of communication, and more specifically, to a resource configuring method and a terminal device.

### BACKGROUND

A vehicle networking or vehicle to everything (V2X) communication is a sidelink (SL) transmission technology based on a device to device (D2D) communication. The vehicle networking system uses a terminal to terminal direct communication, which is different from the manner of a traditional long term evolution (LTE) system that receives and sends data through a base station, and thus has higher spectrum efficiency and lower transmission delay.

An 5G system, i.e., a New Radio (NR) system, needs to support autonomous driving, which has a higher requirement for data transmission performance between vehicles, such as a higher throughput, lower delay, higher reliability, larger coverage, more flexible resource configuring manner and the like. Therefore, how to improve the data transmission performance between terminal devices in NR-V2X has become an urgent problem to be solved.

### SUMMARY

Embodiments of the present application provide a resource configuring method and a terminal device, which can improve a data transmission performance between terminal devices in a D2D system.

A first aspect provides a resource configuring method, including: determining, by a first terminal device, resource pool configuration information of a target resource pool, the target resource pool being configured to communicate with a second terminal device; and sending, by the first terminal device, the resource pool configuration information,
wherein the resource pool configuration information includes at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

A second aspect provides a resource configuring method, including:
receiving, by a second terminal device, resource pool configuration information of a target resource pool; and determining, by the second terminal device, the target resource pool according to the resource pool configuration information, the target resource pool being configured to communicate with a first terminal device,
wherein the resource pool configuration information includes at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

A third aspect provides a terminal device, which can execute the method in the foregoing first aspect or any optional implementation of the first aspect. Specifically, the terminal device may include a functional module for executing the method in the foregoing first aspect or any possible implementation of the first aspect.

A fourth aspect provides a terminal device, which can execute the method in the foregoing second aspect or any optional implementation of the second aspect. Specifically, the terminal device may include a functional module for executing the method in the foregoing second aspect or any possible implementation of the second aspect.

A fifth aspect provides a terminal device including a processor and a memory. The memory is configured to store a computer program, and the processor is configured to call and run the computer program stored in the memory to execute the method in the foregoing first aspect or any possible implementation of the first aspect.

A sixth aspect provides a terminal device including a processor and a memory. The memory is configured to store a computer program, and the processor is configured to call and run the computer program stored in the memory to execute the method in the foregoing second aspect or any possible implementation of the second aspect.

A seventh aspect provides a chip for implementing the method in the foregoing first aspect or any possible implementation of the first aspect. Specifically, the chip includes a processor, configured to call and run a computer program from the memory, so that a device installed with the chip executes the method in the foregoing first aspect or any possible implementation of the first aspect.

An eighth aspect provides a chip for implementing the method in the foregoing second aspect or any possible implementation of the second aspect. Specifically, the chip includes a processor, configured to call and run a computer program from the memory, so that a device installed with the chip executes the method in the foregoing second aspect or any possible implementation of the second aspect.

A ninth aspect provides a computer-readable storage medium for storing a computer program that enables a computer to execute the method in the foregoing first aspect or any possible implementation of the first aspect.

A tenth aspect provides a computer-readable storage medium for storing a computer program that enables a computer to execute the method in the foregoing second aspect or any possible implementation of the second aspect.

An eleventh aspect provides a computer program product including computer program instructions that cause a computer to execute the method in the foregoing first aspect or any possible implementation of the first aspect.

A twelfth aspect provides a computer program product including computer program instructions that cause a computer to execute the method in the foregoing second aspect or any possible implementation of the second aspect.

A thirteenth aspect provides a computer program that, when being run on a computer, causes the computer to execute the method in the foregoing first aspect or any possible implementation of the first aspect.

A fourteenth aspect provides a computer program that, when being run on a computer, causes the computer to execute the method in the foregoing second aspect or any possible implementation of the second aspect.

A fifteenth aspect provides a communication system including a first terminal device and a second terminal device.

Wherein the first terminal device is configured to determine resource pool configuration information of a target resource pool, the target resource pool being configured to communicate with the second terminal device; and send the resource pool configuration information.

Wherein the second terminal device is configured to receive resource pool configuration information of a target resource pool; and determine the target resource pool according to the resource pool configuration information, the target resource pool being configured to communicate with the first terminal device.

Wherein the resource pool configuration information includes at least one of: information of a carrier where the target resource pool is located; information of a time domain resource and/or information of a frequency domain resource occupied by the target resource pool; a positional relationship between a control channel resource and a data channel resource in the target resource pool; adjacency or non-adjacency between the frequency domain resources of the control channel resource and the data channel resource; adjacency or non-adjacency between the time domain resources of the control channel resource and the data channel resource; information of a demodulation reference signal (DMRS) pattern of the target resource pool; information of a basic parameter set of the target resource pool; and an index of the target resource pool.

Further, the first terminal device is configured to execute the method in the foregoing first aspect or any possible implementation of the first aspect, and the second terminal device is configured to execute the method in the foregoing second aspect or any possible implementation of the second aspect.

Therefore, the first terminal device sends the resource pool configuration information of the resource pool, so that the second terminal device can use the resource pool to communicate with the first terminal device. The resource pool may be an additional resource pool other than a pre-configured resource pool. Since the additional resource pool is configured, and the first terminal device can notify other terminal devices of the resource configuration information of the additional resource pool, more terminal devices can obtain the information of the resource pool and use the resource pool for communicating, thereby improving the data transmission performance between terminal devices to a certain degree.

### BRIEF DESCRIPTION OF THE DRAWINGS

FIG 1 is a schematic architecture diagram of an application scenario according to an embodiment of the present application.
FIG 2 is a schematic architecture diagram of another application scenario according to an embodiment of the present application.
FIG 3 is a flow interaction diagram of a resource configuring method according to an embodiment of the present application.
FIG. 4 is a schematic diagram of frequency division multiplexing and adjacency of a control channel resource and a data channel resource according to an embodiment of the present application.
FIG. 5 is a schematic diagram of frequency division multiplexing and non-adjacency of a control channel resource and a data channel resource according to an embodiment of the present application.
FIG. 6 is a schematic diagram of time division multiplexing of a control channel resource and a data channel resource according to an embodiment of the present application.
FIG. 7 is a schematic block diagram of a first terminal device according to an embodiment of the present application.
FIG. 8 is a schematic block diagram of a second terminal device according to an embodiment of the present application.
FIG. 9 is a schematic structural diagram of a terminal device according to an embodiment of the present application.
FIG. 10 is a schematic structural diagram of a chip according to an embodiment of the present application.
FIG. 11 is a schematic block diagram of a communication system according to an embodiment of the present application.

### DETAILED DESCRIPTION

The technical solutions in embodiments of the present application will be described below in conjunction with the accompanying drawings.

It should be understood that the technical solutions of the embodiments of the present application may be applied to various communication systems, such as a global system of mobile communication (GSM) system, a code division multiple access (CDMA) system, and a wideband code division multiple access (WCDMA) system, a long term evolution (LTE) system, an LTE frequency division duplex (FDD) system, an LTE time division duplex (TDD), a universal mobile telecommunication system (UMTS), and a future 5G communication system.

The present application describes various embodiments in conjunction with a terminal device. The terminal device may also refer to user equipment (UE), an access terminal, a user unit, a user station, a mobile station, a mobile termination, a remote station, a remote terminal, mobile equipment, a user terminal, a terminal, a wireless communication device, a user agent or a user device. The access terminal may be a cellular phone, a cordless phone, a session initiation protocol (SIP) phone, a wireless local loop (WLL) station, a personal digital assistant (PDA), a handheld device having a wireless communication function, a computing device, other processing devices connected to a wireless modem, an in-vehicle device, a wearable device, a terminal device in the future 5G network, a terminal device in a future evolution public land mobile network (PLMN) or the like.

The present application describes various embodiments in conjunction with a network device. The network device may be a device used to communicate with a terminal device, such as a base transceiver station (BTS) in the GSM system or CDMA, a NodeB (NB) in the WCDMA system, or an evolutional Node B (eNB or eNodeB) in the LTE system. Optionally, the network device may be a relay station, an access point, an in-vehicle device, a wearable device, and a network side device in the future 5G network or a network side device in the future evolution PLMN network.

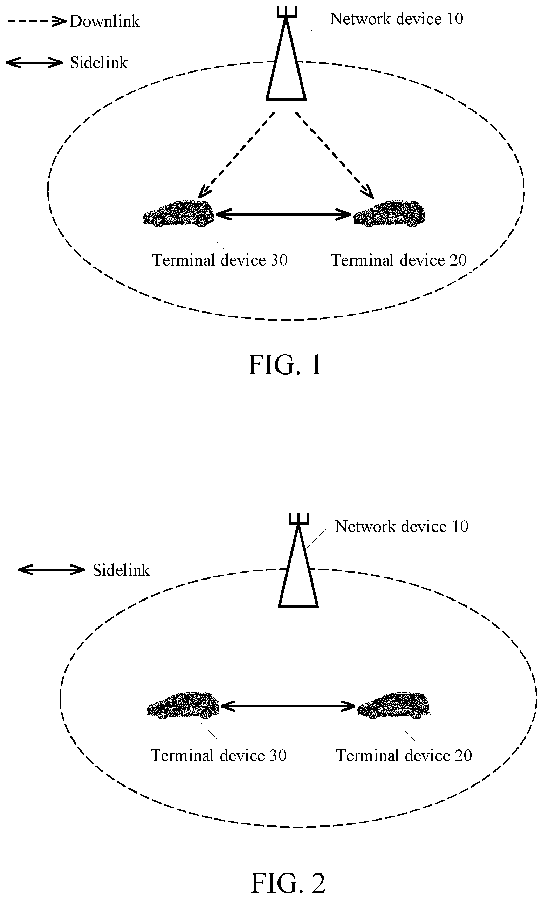

FIGS. 1 and 2 are schematic diagrams of possible application scenarios according to an embodiment of the present application. FIG. 1 exemplarily shows one network device and two terminal devices. Optionally, the wireless communication system may include a plurality of network devices and the coverage of each of the network devices may include other numbers of terminal devices, which is not limited in the present disclosure.

In addition, the wireless communication system may further include other network entities such as a mobile management entity (MME), a serving gateway (S-GW), a packet data network gateway (P-GW), however, the embodiment of the present disclosure is not limited thereto.

Terminal devices 20 and 30 may communicate with each other in a D2D communication mode. The terminal devices 20 and 30, in the D2D communication, directly communicate with each other through a D2D link, that is, a sidelink (SL). For example, as shown in FIG. 1 or 2, the terminal devices 20 and 30 directly communicate with each other through the sidelink. In FIG. 1, the terminal devices 20 and 30 communicate with each other via the sidelink, with a transmission resource being configured by the network device. In FIG. 2, the terminal devices 20 and 30 communicate with each other through the sidelink, with the transmission resource being independently selected by the terminal device and not configured by the network device.

The D2D communication may refer to a vehicle to vehicle (V2V) communication or a vehicle to everything (V2X) communication. In the V2X communication, X may generally refer to any device with a wireless receiving and sending capability, including but not limited to for example a slow-moving wireless device, a fast-moving in-vehicle device, a network control node with a wireless transmitting and receiving capability. It shall be understood that the embodiment of the present disclosure is mainly applied to the V2X communication scenario, but may also be applied to any other D2D communication scenario, which is not limited in the embodiment of the present disclosure.

Two transmission modes, i.e., transmission mode 3 (mode 3) and transmission mode 4 (mode 4), are defined in the vehicle networking. The transmission resource of the terminal device in the mode 3 is allocated by the base station. The terminal device transmits data over the sidelink according to the resource allocated by the base station. The base station may allocate a resource for a single transmission to the terminal device, and may also allocate a semi-static transmission resource to the terminal device. If the terminal device in the transmission mode 4 (mode 4) has a sensing capability, it transmits data in a sensing and reservation manner. If the terminal device in the mode 4 does not have the sensing capability, it will randomly select a transmission resource in the resource pool. The terminal device with the sensing capability obtains a set of available resources in the resource pool through the sensing manner, and the terminal device randomly selects a resource from the set for data transmission. Because the service in the vehicle networking system has a periodic characteristic, the terminal device usually adopts a semi-static transmission manner, that is, after the terminal device selects a transmission resource, it will continuously use the resource in multiple transmission cycles, thereby reducing a resource re-selecting and resource conflicting possibility. The terminal device will carry and reserve information for a next resource transmission in control information currently transmitted, so that other terminal devices may determine whether this resource is reserved and used by the terminal device by detecting the control information of the terminal device, thereby reducing resource conflicting.

The above-mentioned resource pools used by the terminal device in a data transmission process are all pre-configured or network-configured. When being outside a network coverage, the terminal device may only use the pre-configured resource pool to transmit data with other terminal devices. When being within the network coverage, the terminal device may use the pre-configured resource pool to transmit data with the terminal device outside the network coverage, and may also use the network-configured resource pool to transmit data with other terminal devices within the network coverage. However, in the NR, there is a higher requirement for data transmission performance between the terminal devices, such as a higher throughput, lower delay, higher reliability, larger coverage, more flexible resource configuring manner and the like. Therefore, in addition to the pre-configured resource pools, the network device may configure additional resource pools for the terminal device for data transmission between the terminal device within the network coverage and the terminal device outside the network coverage.

An embodiment of the present application proposes that a first terminal device sends resource pool configuration information of a resource pool, so that a second terminal device can use the resource pool to communicate with the first terminal device. The resource pool may be an additional resource pool other than a pre-configured resource pool. Since the additional resource pool is configured, and the first terminal device can notify other terminal devices of the resource configuration information of the additional resource pool, more terminal devices can obtain the information of the resource pool and use the resource pool for communicating, thereby improving the data transmission performance between terminal devices to a certain degree.

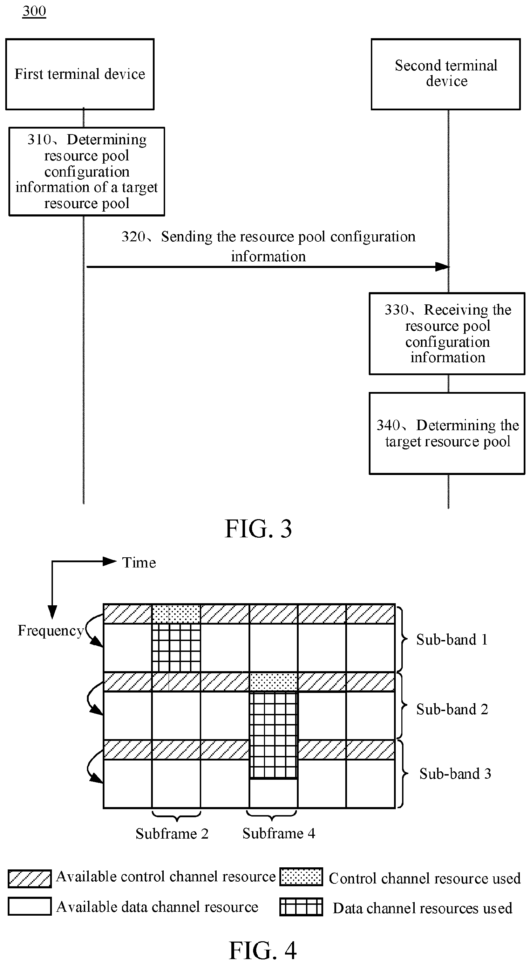

FIG. 3 is a flow interaction diagram of a resource configuring method according to an embodiment of the present application. The method shown in FIG. 3 may be executed by a first terminal device and a second terminal device. The first terminal device may be, for example, the terminal device 20 or the terminal device 30 shown in FIG. 2, and the second terminal device may be, for example, the terminal device 30 or the terminal device 20 shown in FIG. 2.

As shown in FIG 3, the resource configuring method includes:
310, determining, by a first terminal device, resource pool configuration information of a target resource pool, the target resource pool being configured to communicate with a second terminal device;
320, sending, by the first terminal device, the resource pool configuration information;
330, receiving, by the second terminal device, the resource pool configuration information of the target resource pool; and
340, determining, by the second terminal device, the target resource pool according to the resource pool configuration information, the target resource pool being configured to communicate with the first terminal device.

In an embodiment of the present application, the target resource pool may be, for example, the above additional resource pool configured by the network device for the terminal device for communication. In other words, the target resource pool is a resource pool other than the pre-configured resource pool for the terminal device to perform a D2D communication.

Optionally, the first terminal device may be a terminal device in a cell, and the second terminal device may be a terminal device outside the cell. Herein, the second terminal device may be outside the cell where the first terminal device is located and does not belong to other cells, or the second terminal device may be in another cell, that is, the second terminal device and the first terminal device are located in different cells.

When the first terminal device is the terminal device in the cell, the first terminal device may receive the resource pool configuration information of the target resource pool from the network device, and thus perform data transmission in the target resource pool. However, if there is a second terminal device is outside the cell, since the second terminal device cannot receive the resource pool configuration information sent by the network device, the second terminal device cannot use the target resource pool for data transmission. At this time, according to the method of the embodiment of the present application, the first terminal device may send the resource pool configuration information of the target resource pool to the second terminal device, so that the second terminal device can learn the existence of the target resource pool, and thus can transmit data by using the target resource pool.

For example, the first terminal device may send the resource pool configuration information through a first sidelink transmission channel. Optionally, the transmission resource of the first sidelink transmission channel may be a transmission resource pre-configured or configured by a network device, or may be a transmission resource in a pre-configured resource pool. Optionally, the first transmission resource may be used only for transmitting the resource pool configuration information, but not for transmitting other sidelink data.

In an implementation, the first sidelink transmission channel may be a physical sidelink broadcast channel (PSBCH). The PSBCH directly carries the resource pool configuration information of the target resource pool.

In another implementation, the first sidelink transmission channel may be a physical sidelink control channel (PSCCH), and a physical sidelink shared channel (PSSCH) scheduled by the PSCCH carries the resource pool configuration information. Optionally, the first sidelink transmission channel may be the PSSCH, and the PSSCH carries the resource pool configuration information.

In an embodiment of the present application, the resource pool configuration information of the target resource pool may include at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set, also referred to as numerology, of the target resource pool; and
an index of the target resource pool.

It shall be understood that in an embodiment of the present application, a time domain unit may be a subframe, a time slot, a symbol and the like, and a frequency domain unit may be a sub-band, a resource block group (RBG), a physical resource block (PRB) and the like. One sub-band includes a plurality of consecutive PRBs, and one RBG includes a plurality of consecutive PRBs.

Related information of the target resource pool carried in the resource pool configuration information will be described below in detail.

NR-V2X may support a plurality of carriers. In the cell, the network device may configure the resource pool information on respective carriers. Outside the cell, the resource pool information on some carriers may be pre-configured. Therefore, the resource pool configuration information sent by the terminal device in the cell may include carrier information to indicate which carrier the target resource pool is located on. Optionally, the information of the carrier where the target resource pool is located may include the serial number of the carrier where the target resource pool is located. Optionally, the resource pool configuration information sent on a first carrier may be used to indicate the resource pool on a second carrier.

Optionally, if a plurality of bandwidth parts (BWP) may be configured on one carrier, the resource pool configuration information may further include a BWP index to indicate which BWP the target resource pool is located in.

Optionally, the information of the time domain resource occupied by the target resource pool may include:
the size of the time domain unit in the target resource pool, for example, the number of time domain symbols in each subframe;
the number of time domain units in the target resource pool, for example, the number of subframes included in the target resource pool;
the size of the time domain resource occupied by each of the control channel resources (for example, the number of time domain symbols occupied), for example, the number of time domain symbols occupied by each of the control channel resources in the target resource pool in one time domain unit;
the size of the time domain resource occupied by each of the data channel resources (for example, the number of time domain symbols occupied), for example, the number of time domain symbols occupied by each of the data channel resources in the target resource pool in one time domain unit; and
at least two of a time domain position of a first transmission resource in the target resource pool, a time domain position of a last transmission resource in the target resource pool, and a time domain length of the target resource pool, for example, when the target resource pool includes consecutive time domain resources, the information of the time domain resource occupied by the target resource pool may include the time domain position of the first transmission resource in the target resource pool and the time domain length of the target resource pool.

Optionally, the information of the time domain resource occupied by the target resource pool may further include information of the time domain unit occupied by the target resource pool, for example, which time domain units are included in the target resource pool. At this time, optionally, the information of the time domain unit occupied by the target resource pool may be represented by a bitmap, and a value of each bit in the bitmap indicates whether the time domain unit corresponding to the bit belongs to the target resource pool.

For example, the bitmap includes 10 bits, and each of the 10 bits corresponds to one subframe or time slot. The value of the bit being 1 means that the subframe or time slot corresponding to the bit belongs to the target resource pool, and the value of the bit being 0 means that the subframe or time slot corresponding to the bit does not belong to the target. resource pool.

Optionally, the bitmap may be configured to indicate whether the subframe or time slot within each fixed duration range belongs to the target resource pool. For example, the fixed duration is a radio frame, and each radio frame includes 10 subframes. The 10 bits in the bitmap correspond to the 10 subframes in each radio frame respectively. The value of each bit in the bitmap is configured to indicate whether the subframe corresponding to the bit belongs to the target resource pool. A radio frame period includes 1024 radio frames, and the subframes belonging to the target resource pool in each radio frame may be determined by the bitmap, that is, the positions of those subframes belonging to the target resource pool in each radio frame are the same. For example, the bitmap is 1111110000, which means that the first to sixth subframes in each radio frame in the radio frame period belong to the target resource pool.

For another example, the bitmap includes 14 bits, and the 14 bits may respectively indicate whether 14 time domain symbols in subframe 1 belong to the target resource pool. The value of the bit being 1 means that the time domain symbol corresponding to the bit belongs to the target resource pool; and the value of the bit being 0 means that the time domain symbol corresponding to the bit does not belong to the target resource pool. For example, the bitmap is 10101010101010, which means that the target resource pool includes symbol 0, symbol 2, symbol 4, symbol 6, symbol 8, symbol 10, and symbol 12 in the subframe 1.

Optionally, the information of the time domain resource occupied by the target resource pool may include a plurality of bitmaps, which are configured together to indicate the time domain unit occupied by the target resource pool. For example, the information of the time domain resource occupied by the target resource pool includes a first bitmap and a second bitmap. The first bitmap includes 14 bits respectively corresponding to the 14 time domain symbols in each subframe, and is configured to indicate which time domain symbols in each subframe belong to the target resource pool. The second bitmap includes 10 bits respectively corresponding to 10 subframes in each radio frame, and is configured to indicate which subframes in each radio frame belong to the target resource pool. Therefore, with the second bitmap, it is possible to determine which subframes in each radio frame in one radio frame period belong to the target resource pool, and with the first bitmap, it is possible to further determine which time domain symbols in each of these subframes belong to the target resource pool.

Optionally, the information of the frequency domain resource occupied by the target resource pool may include:
the size of the frequency domain unit in the target resource pool, for example, the number of PRBs in each sub-band;
the number of frequency domain units in the target resource pool, for example, the number of sub-bands included in the target resource pool;
the size of frequency domain resource occupied by each of the control channel resources (for example, the number of PRBs or sub-bands occupied), for example, the number of PRBs occupied by each of the control channel resources in the target resource pool in one frequency domain unit;
the size of the frequency domain resource occupied by each of the data channel resources (for example, the number of PRBs or sub-bands occupied), for example, the number of PRBs occupied by each of the data channel resources in the target resource pool in one frequency domain unit;
at least two of a frequency domain start position of the target resource pool, a frequency domain end position of the target resource pool, and a size of the frequency domain occupied by the target resource pool, when the target resource pool includes consecutive frequency domain resources, the information of the frequency domain resource occupied by the target resource pool may include the frequency domain position of the first transmission resource in the target resource pool and a frequency domain width of the target resource pool.

For example, the frequency domain start position of the target resource pool is the index of the first sub-band in the target resource pool, the frequency domain end position of the target resource pool is the index of the last sub-band in the target resource pool, and the size of the frequency domain occupied by the resource pool is the number of sub-bands included in the target resource pool.

Optionally, the positional relationship between the control channel resource and the data channel resource in the target resource pool (or may also be referred to as a structure of the target resource pool) includes time division multiplexing or frequency division multiplexing between the control channel resource and the data channel resource.

Further, the resource pool configuration information of the target resource pool may include an index of the positional relationship. For example, the index 1 of the positional relationship indicates the time division multiplexing between the control channel resource and the data channel resource, and the index 2 of the positional relationship indicates the frequency division multiplexing between the control channel resource and the data channel resource.

In the vehicle networking system, when the terminal device transmits data, the transmission of the data and the transmission of corresponding resource scheduling information may adopt the frequency division multiplexing (FDM) or time division multiplexing (TDM).

Specifically, when the frequency division multiplexing is adopted, the resource pool for transmitting the resource scheduling information and the resource pool for transmitting data have two configurations, namely, in manners of being adjacent and non-adjacent in the frequency domain.

For example, in the case of being adjacent in the frequency domain shown in FIG. 4, the control channel resource for transmitting the resource scheduling information and the data channel resource corresponding to the control channel are adjacent in the frequency domain. The bandwidth of the entire system is based on the sub-frequency band (the sub-band). Each sub-band includes a plurality of consecutive PRBs. The first and second PRBs in each sub-band may be used to transmit the control channel, and the remaining PRBs in each sub-band may be used to transmit the data channel. There is a one-to-one correspondence between the data channel resource and the control channel resource. The resource scheduling information transmitted on the control channel resource is used to schedule the data transmission on the data channel resource corresponding to the control channel resource, and the start position of the data channel resource is determined by the position of its corresponding control channel resource. The data channel resource may occupy one sub-band (for example, the data channel resource on subframe 2 is located in sub-band 1), or it may span a plurality of sub-bands (for example, the data channel resource on subframe 4 is located in sub-band 2 and sub-band 3). When the data channel resource occupies a plurality of sub-bands, the data channel resource is consecutive in the frequency domain in the plurality of sub-bands, and may occupy the control channel resources in other sub-bands. The control channel resource corresponding to the data channel resource is the control channel resource in the first sub-band where the data channel resource is located. For example, the data channel resource on subframe 4 in FIG. 4 occupies two adjacent sub-bands (sub-band 2 and sub-band 3), and its corresponding control channel resource is the control channel resource in the first sub-band (sub-band 2).

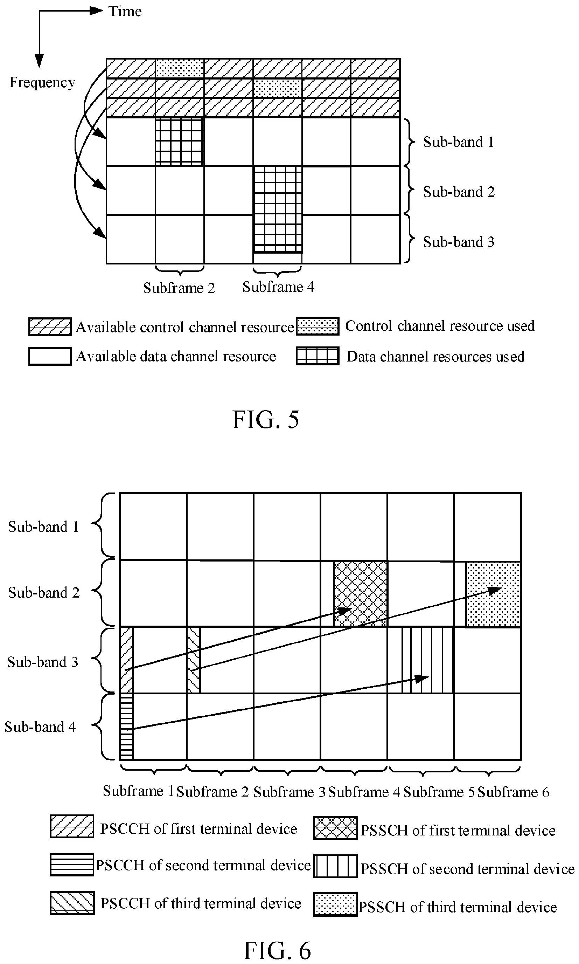

For example, in the case of being non-adjacent in the frequency domain shown in FIG. 5, the control channel resource and its corresponding data channel resource are not adjacent in the frequency domain. The data channel resource and the control channel resource are independently configured, however the position of the data channel resource and the position of the control channel resource are still in one-to-one correspondence. The resource scheduling information transmitted on the control channel resource is configured to schedule the data transmission on the data channel resource corresponding to the control channel resource, and the starting position of the data channel resource may be determined by the position of the corresponding control channel resource. The data channel resource may occupy one sub-band (for example, the data channel resource shown in subframe 2 is located in sub-band 1). The data channel resource may occupy a plurality of control channel resources as the control channel resource in the first sub-band where the data channel resource is located, for example, the data channel resource on subframe 4 in FIG. 5 is located in two adjacent sub-bands (sub-band 2 and sub-band 3), and the corresponding control channel resource is the control channel resource in the first sub-band (sub-band 2).

When the time division multiplexing is adopted, for example, as shown in FIG. 6, the first terminal device transmits the control channel resource thereof, namely PSCCH, on sub-band 3 of subframe 1, and the data channel resource, namely PSSCH, corresponding to the control channel resource is transmitted on sub-band 2 of subframe 4. The sidelink control information (SCI) carried on the control channel resource may carry information of its corresponding data channel resource. The second terminal device transmits its own control channel resource on sub-band 4 in subframe 1, the data channel resource corresponding to the control channel resource is transmitted on sub-band 3 of subframe 5, and the SCI carried on the control channel resource may carry the information of its corresponding data channel resource. The third terminal device transmits its own control channel resource on sub-band 3 of subframe 2, the data channel resource corresponding to the control channel resource is transmitted on sub-band 2 of subframe 6, and the SCI carried on the control channel resource may carry the information of the corresponding data channel resource.

The resource pool configuration information of the target resource pool may carry the positional relationship between the control channel resource and the data channel resource in the target resource pool. After receiving the resource pool configuration information, the second terminal device may know in the target resource pool, whether the control channel and its corresponding data channel are transmitted in the manner shown in FIG. 4 or FIG. 5 or in the manner shown in FIG. 6.

Further, after the positional relationship between the control channel resource and the data channel resource of the target resource pool is determined, the resource pool configuration information may further include information of adjacency or non-adjacency between the frequency domain resources of the control channel resource and the data channel resource and/or information of adjacency or non-adjacency between the time domain resources of the control channel resource and the data channel resource.

For example, when the frequency division multiplexing is determined to be adopted, the resource pool configuration information includes information of adjacency or non-adjacency between the frequency domain resources of the control channel resource and the data channel resource.

Optionally, the information of the demodulation reference signal (DMRS) pattern of the target resource pool includes an index of the DMRS pattern of the target resource pool.

For example, a plurality of DMRS patterns may be pre-configured, and each DMRS pattern has a unique index. The resource pool configuration information may carry the index of the DMRS pattern used during D2D communication in the target resource pool.

NR may support different basic parameter sets, for example, in a low frequency band (for example, less than 6GHz), a subcarrier spacing of 15k, 30kHz may be used; in a high frequency band (for example, greater than 6GHz), the subcarrier spacing of 60k, 120kHz may be used. Therefore, the resource pool configuration information of the target resource pool also needs to carry information of the basic parameter set.

Optionally, the basic parameter set may include at least one of the following parameters: a subcarrier spacing, a number of subcarriers in a specific bandwidth, a number of the subcarriers in a physical resource block (PRB), a length of an orthogonal frequency division multiplexing (OFDM) symbol, a number of points of a Fourier transform (for example, fast Fourier transform (FFT)) or an inverse Fourier transform (for example, inverse fast Fourier transform (IFFT)) for generating an OFDM signal, a number of the OFDM symbols in a transmission time interval (TTI), a number of the TTIs included in a specific time length, and a length of a signal prefix, also referred to as cyclic prefix.

The subcarrier spacing may refer to a frequency interval of adjacent subcarriers, such as 15kHz, 60kHz, and the like. The number of subcarriers in a specific bandwidth is, for example, the number of subcarriers corresponding to each possible system bandwidth. The number of subcarriers included in the PRB may typically be, for example, an integer multiple of 12. The number of OFDM symbols included in the TTI may typically be, for example, an integer multiple of 14. The number of TTIs included in a certain time unit may refer to the number of TTIs included in a time length of 1ms or 10ms. The length of signal prefix is, for example, a time length of a cyclic prefix of the signal, or whether the cyclic prefix uses a conventional cyclic prefix (CP) or an extended CP.

Considering that a plurality of resource pools may be configured on each carrier, it is more convenient that the resource pool configuration information of the target resource pool may also carry the index of the target resource pool. The foregoing resource configuration information of the target resource pool may be obtained according to the index of the target resource pool.

It shall be noted that the respective embodiments described in the present application and/or the technical features in the respective embodiments may be combined with each other arbitrarily without conflicting, and the technical solutions obtained after the combination should also fall within the protection scope of the present application.

In addition, the "pre-configured" in the embodiments of the present application refers to being pre-agreed, for example, being specified according to a protocol, or may refer to being pre-defined. The "configured by the network device" refers to being determined by the network device and being instructed by the network device to the terminal device.

It shall be understood that in the various embodiments of the present application, the sequence number of the above-mentioned processes does not mean an execution order, and the execution order of each process should be determined by the function and internal logic thereof, which does not limit the implementation of the embodiments of the present application.

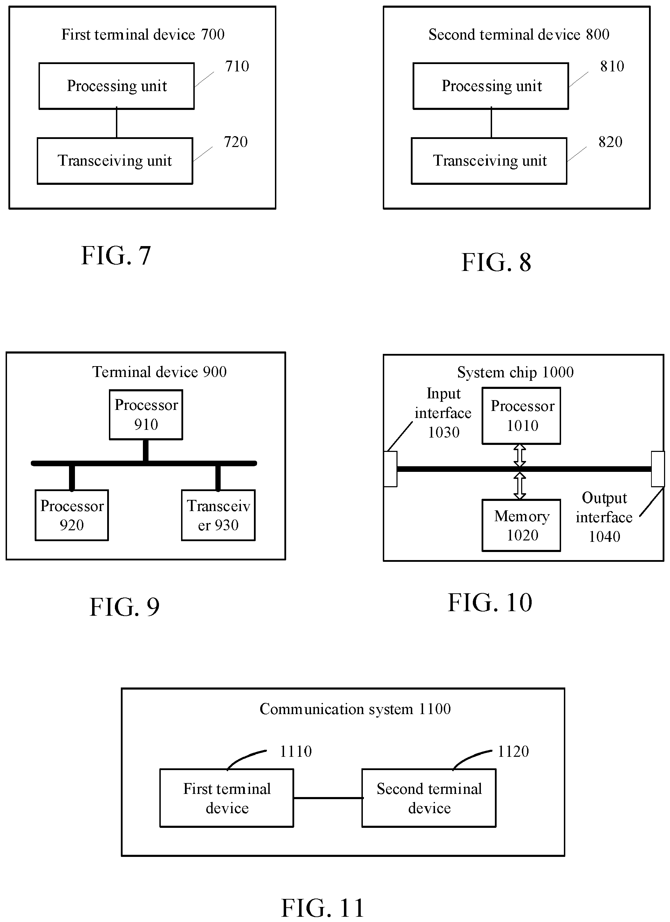

The communication method according to the embodiment of the present application is described in detail above. A device according to an embodiment of the present application will be described below in conjunction with FIG. 7 to FIG. 11. The technical features described in the method embodiment are applicable to the following device embodiments.

FIG. 7 is a schematic block diagram of a terminal device 700 according to an embodiment of the present application. The terminal device is a first terminal device. As shown in FIG. 7, the terminal device 700 includes a processing unit 710 and a transceiving unit 720.

The processing unit 710 is configured to determine resource pool configuration information of a target resource pool, the target resource pool being configured to communicate with a second terminal device.

The transceiving unit 720 is configured to send the resource pool configuration information.

The resource pool configuration information includes at least one of: information of a carrier where the target resource pool is located; information of a time domain resource and/or information of a frequency domain resource occupied by the target resource pool; a positional relationship between a control channel resource and a data channel resource in the target resource pool; adjacency or non-adjacency between the frequency domain resources of the control channel resource and the data channel resource; adjacency or non-adjacency between the time domain resources of the control channel resource and the data channel resource; information of a demodulation reference signal (DMRS) pattern of the target resource pool; information of a basic parameter set (also referred to as numerology) of the target resource pool; and an index of the target resource pool.

Therefore, the first terminal device sends the resource pool configuration information of the target resource pool, so that the second terminal device can use the target resource pool to communicate with the first terminal device. The target resource pool may be an additional resource pool other than a pre-configured resource pool. Since the additional resource pool is configured, and the first terminal device can notify other terminal devices of the resource configuration information of the additional resource pool, more terminal devices can obtain the information of the resource pool and use the resource pool for communicating, thereby improving the data transmission performance between terminal devices to a certain degree.

Optionally, the information of the time domain resource occupied by the target resource pool includes at least one of: information of a time domain unit occupied by the target resource pool; a number of time domain symbols occupied by each of the control channel resources; a number of time domain symbols occupied by each of the data channel resources; at least two of a time domain position of a first transmission resource in the target resource pool, a time domain position of a last transmission resource in the target resource pool, and a time domain length of the target resource pool.

Optionally, the information of the time domain unit occupied by the target resource pool includes a bitmap, and a value of each bit in the bitmap indicates whether the time domain unit corresponding to the bit belongs to the target resource pool.

Optionally, the information of the frequency domain resource occupied by the target resource pool includes at least one of: information of a frequency domain unit occupied by the target resource pool; a size of the frequency domain unit in the target resource pool; a number of the frequency domain units in the target resource pool; and at least two of a frequency domain start position of the target resource pool, a frequency domain end position of the target resource pool, and a size of the frequency domain occupied by the target resource pool.

Optionally, the positional relationship between the control channel resource and the data channel resource in the target resource pool includes time division multiplexing or frequency division multiplexing between the control channel resource and the data channel resource.

Optionally, the information of the DMRS pattern of the target resource pool includes an index of the DMRS pattern of the target resource pool.

Optionally, the information of the basic parameter set of the target resource pool includes at least one of: a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs included in a specific time length, and a length of a signal prefix (also referred to as cyclic prefix).

Optionally, the first terminal device is a terminal device in a cell, and the second terminal device is a terminal device outside the cell.

It shall be understood that the terminal device 700 may perform the corresponding operations performed by the first terminal device in the foregoing method 300, and for the sake of brevity, details thereof are not repeated herein.

FIG. 8 is a schematic block diagram of a terminal device 800 according to an embodiment of the present application. The terminal device is a second terminal device. As shown in FIG. 8, the second terminal device 800 includes a transceiving unit 810 and a processing unit 820.

The transceiving unit 810 is configured to receive resource pool configuration information of a target resource pool.

The processing unit 820 is configured to determine the target resource pool according to the resource pool configuration information, the target resource pool being configured to communicate with a first terminal device.

The resource pool configuration information includes at least one of: information of a carrier where the target resource pool is located; information of a time domain resource and/or information of a frequency domain resource occupied by the target resource pool; a positional relationship between a control channel resource and a data channel resource in the target resource pool; adjacency or non-adjacency between the frequency domain resources of the control channel resource and the data channel resource; adjacency or non-adjacency between the time domain resources of the control channel resource and the data channel resource; information of a demodulation reference signal (DMRS) pattern of the target resource pool; information of a basic parameter set (also referred to as numerology) of the target resource pool; and an index of the target resource pool.

The target resource pool may be an additional resource pool other than a pre-configured resource pool. Since the additional resource pool is configured, and the second terminal device may receive the resource configuration information of the additional resource pool notified by other terminal devices, the second terminal device can obtain the information of the resource pool and use the resource pool for communicating, thereby improving the data transmission performance between terminal devices to a certain degree.

Optionally, the information of the time domain resource occupied by the target resource pool includes at least one of: information of a time domain unit occupied by the target resource pool; a number of time domain symbols occupied by each of the control channel resources; a number of time domain symbols occupied by each of the data channel resources; at least two of a time domain position of a first transmission resource in the target resource pool, a time domain position of a last transmission resource in the target resource pool, and a time domain length of the target resource pool.

Optionally, the information of the time domain unit occupied by the target resource pool includes a bitmap, and a value of each bit in the bitmap indicates whether the time domain unit corresponding to the bit belongs to the target resource pool.

Optionally, the information of the frequency domain resource occupied by the target resource pool includes at least one of: information of a frequency domain unit occupied by the target resource pool; a size of the frequency domain unit in the target resource pool; a number of the frequency domain units in the target resource pool; and at least two of a frequency domain start position of the target resource pool, a frequency domain end position of the target resource pool, and a size of the frequency domain occupied by the target resource pool.

Optionally, the positional relationship between the control channel resource and the data channel resource in the target resource pool includes time division multiplexing or frequency division multiplexing between the control channel resource and the data channel resource.

Optionally, the information of the DMRS pattern of the target resource pool includes an index of the DMRS pattern of the target resource pool.

Optionally, the information of the basic parameter set of the target resource pool includes at least one of: a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs included in a specific time length, and a length of a signal prefix (also referred to as cyclic prefix).

Optionally, the first terminal device is a terminal device in a cell, and the second terminal device is a terminal device outside the cell.

It shall be understood that the terminal device 800 may perform the corresponding operations performed by the second terminal device in the foregoing method 300, and for the sake of brevity, details thereof are not repeated herein.

FIG. 9 is a schematic structural diagram of a terminal device 900 provided by an embodiment of the present application. The terminal device 900 shown in FIG. 9 includes a processor 910, and the processor 910 can call and run a computer program from a memory to implement the method in the embodiment of the present application.

Optionally, as shown in FIG. 9, the terminal device 900 may further include a memory 920. The processor 910 may call and run the computer program from the memory 920 to implement the method in the embodiment of the present application.

The memory 920 may be a separate device independent of the processor 910, or may be integrated in the processor 910.

Optionally, as shown in FIG. 9, the terminal device 900 may further include a transceiver 930, and the processor 910 may control the transceiver 930 to communicate with other devices, specifically, to send information or data to other devices or to receive information or data sent by the other devices.

The transceiver 930 may include a transmitter and a receiver. The transceiver 930 may further include an antenna, and the number of antennas may be one or more.

Optionally, the terminal device 900 may specifically be the first terminal device of the embodiment of the present application, and the communication device 900 may implement the corresponding process implemented by the first terminal device in each method of the embodiment of the present application, which will not be repeated here for the sake of brevity.

Optionally, the terminal device 900 may specifically be the second terminal device of the embodiment of the present application, and the terminal device 900 may implement the corresponding process implemented by the second terminal device in each method of the embodiment of the present application, which will not be repeated here for the sake of brevity.

FIG. 10 is a schematic structural diagram of a chip according to an embodiment of the present application. The chip 1000 shown in FIG. 10 includes a processor 1010, and the processor 1010 can call and run a computer program from a memory to implement the method in the embodiment of the present application.

Optionally, as shown in FIG. 10, the chip 1000 may further include a memory 1020. The processor 1010 may call and run the computer program from the memory 1020 to implement the method in the embodiment of the present application.

The memory 1020 may be a separate device independent of the processor 1010, or may be integrated in the processor 1010.

Optionally, the chip 1000 may further include an input interface 1030. The processor 1010 can control the input interface 1030 to communicate with other devices or chips, specifically, to obtain information or data sent by other devices or chips.

Optionally, the chip 1000 may further include an output interface 1040. The processor 1010 can control the output interface 1040 to communicate with other devices or chips, specifically, to output information or data to other devices or chips.

Optionally, the chip can be applied to the first terminal device in the embodiment of the present application, and the chip can implement the corresponding process implemented by the first terminal device in each method of the embodiment of the present application, which will not be repeated here for the sake of brevity.

Optionally, the chip can be applied to the second terminal device in the embodiment of the present application, and the chip can implement the corresponding process implemented by the second terminal device in each method of the embodiment of the present application, which will not be repeated here for the sake of brevity.

It shall be understood that the chip mentioned in the embodiment of the present application may also be referred to as system-on-chip or the like.

It shall be understood that the processor in an embodiment of the present application may be an integrated circuit chip with signal processing capability. In the implementation process, the steps of the foregoing method embodiments may be completed by integrated logic circuits in the form of hardware in the processor or instructions in the form of software. The above-mentioned processor may be a general-purpose processor, a digital signal processor (DSP), an application specific integrated circuit (ASIC), a field programmable gate array (FPGA) or other programmable logic devices, a discrete gate or transistor logic device, and a discrete hardware component. The methods, steps, and logical block diagrams disclosed in the embodiments of the present application may be implemented or executed. The general-purpose processor may be a microprocessor or any conventional processor. The steps of the method disclosed in the embodiments of the present application may be directly embodied as being executed and completed by a hardware decoding processor or by a combination of hardware and software modules in the decoding processor. The software module can be located in a mature storage medium in the field such as a random memory, a flash memory, a read-only memory, a programmable read-only memory, electrically erasable programmable memory, and a register. The storage medium is located in the memory, and the processor reads the information in the memory and completes the steps of the above method in combination with the hardware thereof.

It can be understood that the memory in an embodiment of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. By way of example but not limitation, there are a lot of available RAMs, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It shall be noted that the memory in the system and method described herein is intended to include, but is not limited to, these and any other suitable types of memories.

It shall be understood that the foregoing memory is exemplary but not restrictive. For example, the memory in an embodiment of the present application may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM) and the like. That is, the memory in the embodiment of the present application is intended to include, but is not limited to, these and any other suitable types of memories.

FIG. 11 is a schematic block diagram of a communication system 1100 according to an embodiment of the present application. As shown in FIG. 11, the communication system 1100 includes a first terminal device 1110 and a second terminal device 1120.

The first terminal device 1110 is configured to: determine resource pool configuration information of a target resource pool, the target resource pool being configured to communicate with the second terminal device; and send the resource pool configuration information.

The second terminal device 1120 is configured to: receive the resource pool configuration information of the target resource pool; and determine the target resource pool according to the resource pool configuration information, the target resource pool being configured to communicate with the first terminal device.

The resource pool configuration information includes at least one of: information of a carrier where the target resource pool is located; information of a time domain resource and/or information of a frequency domain resource occupied by the target resource pool; a positional relationship between a control channel resource and a data channel resource in the target resource pool; adjacency or non-adjacency between the frequency domain resources of the control channel resource and the data channel resource; adjacency or non-adjacency between the time domain resources of the control channel resource and the data channel resource; information of a demodulation reference signal (DMRS) pattern of the target resource pool; information of a basic parameter set (also referred to as numerology) of the target resource pool; and an index of the target resource pool.

The first terminal device 1110 may be configured to implement the corresponding function implemented by the first terminal device in the above method 300, and the constitution of the first terminal device 1110 may be as shown in the first terminal device 700 in FIG. 7, which will not be repeated here for the sake of brevity.

The second terminal device 1110 may be configured to implement the corresponding function implemented by the second terminal device in the above method 300, and the constitution of the second terminal device 1120 may be as shown in the second terminal device 800 in FIG. 8, which will not be repeated here for the sake of brevity.

An embodiment of the present application also provides a computer-readable storage medium for storing computer programs.

Optionally, the computer-readable storage medium may be applied to the network device in the embodiment of the present application, and the computer program causes a computer to execute the corresponding process implemented by the network device in each method of the embodiment of the present application, which will not be repeated here for the sake of brevity.

Optionally, the computer-readable storage medium may be applied to the terminal device in the embodiment of the present application, and the computer program causes a computer to execute the corresponding process implemented by the terminal device in each method of the embodiment of the present application, which will not be repeated here for the sake of brevity.

An embodiment of the present application also provides a computer program product including computer program instructions.

Optionally, the computer program product may be applied to the network device in the embodiment of the present application, and the computer program instructions cause a computer to execute the corresponding process implemented by the network device in each method of the embodiment of the present application, which will not be repeated here for the sake of brevity.

Optionally, the computer program product may be applied to the terminal device in the embodiment of the present application, and the computer program instructions cause a computer to execute the corresponding process implemented by the terminal device in each method of the embodiment of the present application, which will not be repeated here for the sake of brevity.

An embodiment of the present application also provides a computer program.

Optionally, the computer program may be applied to the network device in the embodiment of the present application, and the computer program, when being run on a computer, causes the computer to execute the corresponding process implemented by the network device in each method of the embodiment of the present application, which will not be repeated here for the sake of brevity.

Optionally, the computer program may be applied to the terminal device in the embodiment of the present application, and the computer program, when being run on a computer, causes the computer to execute the corresponding process implemented by the terminal device in each method of the embodiment of the present application, which will not be repeated here for the sake of brevity.

It shall be understood that the terms "system" and "network" are often used interchangeably herein. The term "and/or" herein is only an association relationship that describes associated objects, which means three relationships, for example, A and/or B can mean: A exists alone, A and B exist at the same time, and B exists alone. In addition, the character "/" herein generally indicates that associated objects before and after the same are in an "or" relationship.

It shall also be understood that in the embodiment of the present disclosure, "B corresponding to A" means that B is associated with A, and B can be determined according to A. However, it shall also be understood that determining B based on A does not mean that B is determined only based on A, and B can also be determined based on A and/or other information.

Those skilled in the art may realize that the unit and algorithm step of the examples described in combination with the embodiments disclosed herein can be implemented by electronic hardware, or a combination of computer software and electronic hardware. Whether these functions are executed by hardware or software depends on the specific application and design constraints of the technical solution. Professionals and technicians can use different methods for each specific application to implement the described functions, but such implementation shall not be considered as going beyond the scope of the present application.

Those skilled in the art can clearly understand that, for convenience and concise description, the specific working process of the above-described system, device, and unit can refer to the corresponding process in the foregoing method embodiment, which will not be repeated herein.

In several embodiments provided by present application, it shall be understood that the disclosed system, device, and method may be implemented in other ways. For example, the device embodiment described above is only illustrative. For example, the division of unit is only a logical function division, and there may be other division methods in actual implementation, for example, a plurality of units or components may be combined or may be integrated into another system, or some features may be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or they may be distributed on a plurality of network units. Some or all of the units may be selected according to actual needs to achieve the objectives of the solutions of the embodiments.

In addition, the functional units in each embodiment of the present application may be integrated into one processing unit, or each unit may exist alone physically, or two or more units may be integrated into one unit.

If the function is implemented in the form of a software functional unit and sold or used as an independent product, it can be stored in a computer readable storage medium. Based on this understanding, the technical solution of the present application essentially or a part that contributes to the prior art or a part of the technical solution can be embodied in the form of a software product, and the computer software product is stored in a storage medium, and includes several instructions to cause a computer device (which may be a personal computer, a server, a network device or the like) to execute all or part of the steps of the methods described in the various embodiments of the present application. The above storage media includes a U disk, a mobile hard disk, a read-only memory (ROM), a random access memory (RAM), a magnetic disk, an optical disk and other media that can store program codes.

The above are only specific implementations of the present application, but the protection scope of the present application is not limited thereto. Any person skilled in the art can easily conceive of changes or substitutions within the technical scope disclosed in the present application, which shall fall within the protection scope of the present application. Therefore, the protection scope of the present application shall be subject to the protection scope of the claims.

## Claims

1. A resource configuring method, wherein the method comprises:
determining, by a first terminal device, resource pool configuration information of a target resource pool, the target resource pool being configured to communicate with a second terminal device; and
sending, by the first terminal device, the resource pool configuration information,
wherein the resource pool configuration information comprises at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

2. The method according to claim 1, wherein the information of the time domain resource occupied by the target resource pool comprises at least one of:
information of a time domain unit occupied by the target resource pool;
a number of time domain symbols occupied by each of the control channel resources;
a number of time domain symbols occupied by each of the data channel resources;
at least two of a time domain position of a first transmission resource in the target resource pool, a time domain position of a last transmission resource in the target resource pool, and a time domain length of the target resource pool.

3. The method according to claim 2, wherein the information of the time domain unit occupied by the target resource pool comprises a bitmap, and a value of each bit in the bitmap indicates whether the time domain unit corresponding to the bit belongs to the target resource pool.

4. The method according to any one of claims 1 to 3, wherein the information of the frequency domain resource occupied by the target resource pool comprises at least one of:
information of a frequency domain unit occupied by the target resource pool;
a size of the frequency domain unit in the target resource pool;
a number of the frequency domain units in the target resource pool; and
at least two of a frequency domain start position of the target resource pool, a frequency domain end position of the target resource pool, and a size of the frequency domain occupied by the target resource pool.

5. The method according to any one of claims 1 to 4, wherein the positional relationship between the control channel resource and the data channel resource in the target resource pool comprises time division multiplexing or frequency division multiplexing between the control channel resource and the data channel resource.

6. The method according to any one of claims 1 to 5, wherein the information of the DMRS pattern of the target resource pool comprises an index of the DMRS pattern of the target resource pool.

7. The method according to any one of claims 1 to 6, wherein the information of the basic parameter set of the target resource pool comprises at least one of:
a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs comprised in a specific time length, and a length of a signal prefix.

8. The method according to any one of claims 1 to 7, wherein the first terminal device is a terminal device in a cell, and the second terminal device is a terminal device outside the cell.

9. A resource configuring method, wherein the method comprises:
receiving, by a second terminal device, resource pool configuration information of a target resource pool; and
determining, by the second terminal device, the target resource pool according to the resource pool configuration information, the target resource pool being configured to communicate with a first terminal device,
wherein the resource pool configuration information comprises at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

10. The method according to claim 9, wherein the information of the time domain resource occupied by the target resource pool comprises at least one of:
information of a time domain unit occupied by the target resource pool;
a number of time domain symbols occupied by each of the control channel resources;
a number of time domain symbols occupied by each of the data channel resources;
at least two of a time domain position of a first transmission resource in the target resource pool, a time domain position of a last transmission resource in the target resource pool, and a time domain length of the target resource pool.

11. The method according to claim 10, wherein the information of the time domain unit occupied by the target resource pool comprises a bitmap, and a value of each bit in the bitmap indicates whether the time domain unit corresponding to the bit belongs to the target resource pool.

12. The method according to any one of claims 9 to 11, wherein the information of the frequency domain resource occupied by the target resource pool comprises at least one of:
information of a frequency domain unit occupied by the target resource pool;
a size of the frequency domain unit in the target resource pool;
a number of the frequency domain units in the target resource pool; and
at least two of a frequency domain start position of the target resource pool, a frequency domain end position of the target resource pool, and a size of the frequency domain occupied by the target resource pool.

13. The method according to any one of claims 9 to 12, wherein the positional relationship between the control channel resource and the data channel resource in the target resource pool comprises time division multiplexing or frequency division multiplexing between the control channel resource and the data channel resource.

14. The method according to any one of claims 9 to 13, wherein the information of the DMRS pattern of the target resource pool comprises an index of the DMRS pattern of the target resource pool.

15. The method according to any one of claims 9 to 14, wherein the information of the basic parameter set of the target resource pool comprises at least one of:
a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs comprised in a specific time length, and a length of a signal prefix.

16. The method according to any one of claims 9 to 15, wherein the first terminal device is a terminal device in a cell, and the second terminal device is a terminal device outside the cell.

17. A terminal device, wherein the terminal device is a first terminal device, and the first terminal device comprises:
a processing unit, configured to determine resource pool configuration information of a target resource pool, the target resource pool being configured to communicate with a second terminal device; and
a transceiving unit, configured to send the resource pool configuration information,
wherein the resource pool configuration information comprises at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

18. The terminal device according to claim 17, wherein the information of the time domain resource occupied by the target resource pool comprises at least one of:
information of a time domain unit occupied by the target resource pool;
a number of time domain symbols occupied by each of the control channel resources;
a number of time domain symbols occupied by each of the data channel resources;
at least two of a time domain position of a first transmission resource in the target resource pool, a time domain position of a last transmission resource in the target resource pool, and a time domain length of the target resource pool.

19. The terminal device according to claim 18, wherein the information of the time domain unit occupied by the target resource pool comprises a bitmap, and a value of each bit in the bitmap indicates whether the time domain unit corresponding to the bit belongs to the target resource pool.

20. The terminal device according to any one of claims 17 to 19, wherein the information of the frequency domain resource occupied by the target resource pool comprises at least one of:
information of a frequency domain unit occupied by the target resource pool;
a size of the frequency domain unit in the target resource pool;
a number of the frequency domain units in the target resource pool; and
at least two of a frequency domain start position of the target resource pool, a frequency domain end position of the target resource pool, and a size of the frequency domain occupied by the target resource pool.

21. The terminal device according to any one of claims 17 to 20, wherein the positional relationship between the control channel resource and the data channel resource in the target resource pool comprises time division multiplexing or frequency division multiplexing between the control channel resource and the data channel resource.

22. The terminal device according to any one of claims 17 to 21, wherein the information of the DMRS pattern of the target resource pool comprises an index of the DMRS pattern of the target resource pool.

23. The terminal device according to any one of claims 17 to 22, wherein the information of the basic parameter set of the target resource pool comprises at least one of:
a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs comprised in a specific time length, and a length of a signal prefix.

24. The terminal device according to any one of claims 17 to 23, wherein the first terminal device is a terminal device in a cell, and the second terminal device is a terminal device outside the cell.

25. A terminal device, wherein the terminal device is a second terminal device, and the second terminal device comprises:
a transceiving unit, configured to receive resource pool configuration information of a target resource pool; and
a processing unit, configured to determine the target resource pool according to the resource pool configuration information, the target resource pool being configured to communicate with a first terminal device,
wherein the resource pool configuration information comprises at least one of:
information of a carrier where the target resource pool is located;
information of a time domain resource and/or information of a frequency domain resource occupied by the target resource pool;
a positional relationship between a control channel resource and a data channel resource in the target resource pool;
adjacency or non-adjacency between the frequency domain resources of the control channel resource and the data channel resource;
adjacency or non-adjacency between the time domain resources of the control channel resource and the data channel resource;
information of a demodulation reference signal (DMRS) pattern of the target resource pool;
information of a basic parameter set of the target resource pool; and
an index of the target resource pool.

26. The terminal device according to claim 25, wherein the information of the time domain resource occupied by the target resource pool comprises at least one of:
information of a time domain unit occupied by the target resource pool;
a number of time domain symbols occupied by each of the control channel resources;
a number of time domain symbols occupied by each of the data channel resources;
at least two of a time domain position of a first transmission resource in the target resource pool, a time domain position of a last transmission resource in the target resource pool, and a time domain length of the target resource pool.

27. The terminal device according to claim 26, wherein the information of the time domain unit occupied by the target resource pool comprises a bitmap, and a value of each bit in the bitmap indicates whether the time domain unit corresponding to the bit belongs to the target resource pool.

28. The terminal device according to any one of claims 25 to 27, wherein the information of the frequency domain resource occupied by the target resource pool comprises at least one of:
information of a frequency domain unit occupied by the target resource pool;
a size of the frequency domain unit in the target resource pool;
a number of the frequency domain units in the target resource pool; and
at least two of a frequency domain start position of the target resource pool, a frequency domain end position of the target resource pool, and a size of the frequency domain occupied by the target resource pool.

29. The terminal device according to any one of claims 25 to 28, wherein the positional relationship between the control channel resource and the data channel resource in the target resource pool comprises time division multiplexing or frequency division multiplexing between the control channel resource and the data channel resource.

30. The terminal device according to any one of claims 25 to 29, wherein the information of the DMRS pattern of the target resource pool comprises an index of the DMRS pattern of the target resource pool.

31. The terminal device according to any one of claims 25 to 30, wherein the information of the basic parameter set of the target resource pool comprises at least one of:
a subcarrier spacing, a number of subcarriers in a specific bandwidth, a number of the subcarriers in a physical resource block (PRB), a length of an orthogonal frequency division multiplexing (OFDM) symbol, a number of points of a Fourier transform or an inverse Fourier transform for generating an OFDM signal, a number of the OFDM symbols in a transmission time interval (TTI), a number of the TTIs comprised in a specific time length, and a length of a signal prefix.

32. The terminal device according to any one of claims 25 to 31, wherein the first terminal device is a terminal device in a cell, and the second terminal device is a terminal device outside the cell.

33. A terminal device, wherein the terminal device comprises:
a memory, having a computer program stored thereon; and
a processor, configured to call and run the computer program stored in the memory to execute the method according to any one of claims 1 to 8, or the method according to any one of claims 9 to 16.

34. A chip, wherein the chip comprises a processor, and the processor is configured to call and run a computer program from a memory, so that a device installed with the chip executes the method according to any one of claims 1 to 8 or the method according to any one of claims 9 to 16.

35. A computer-readable storage medium, wherein the computer-readable storage medium is configured to store a computer program that enables a computer to execute the method according to any one of claims 1 to 8 or the method according to any one of claims 9 to 16.

36. A computer program product, wherein the computer program product comprises computer program instructions that cause a computer to execute the method according to any one of claims 1 to 8 or the method according to any one of claims 9 to 16.

37. A computer program, wherein the computer program causes a computer to execute the method according to any one of claims 1 to 8 or the method according to any one of claims 9 to 16.

38. A communication system, wherein the communication system comprises the first terminal device according to any one of claims 17 to 24 and the second terminal device according to any one of claims 25 to 32.
